# EUROPEAN PATENT APPLICATION

(11) **EP 2 592 215 A1**
(43) Date of publication of application: **15.05.2013**
(21) Application number: 11803031.1
(22) Date of filing: 08.07.2011
(51) Int. Cl.: E21B 7/00, E21B 10/00, B23K 26/00

(54) **LASER DRILLING DEVICE**

(30) Priority: 08.07.2010 BR PI1002337
(71) Applicant: Faculdades Católicas, Sociedade Civil Mantenedora da PUC Rio, Gávea Cep: 22453-900 Rio de Janeiro - RJ (BR)
(72) Inventor: BRAGA, Arthur Martins Barbosa, 22441-030 Rio de Janeiro - RJ (BR); MARTELLI, Cicero, 22411-040 Rio de Janeiro - RJ (BR)
(74) Representative: Pulieri, Gianluca Antonio
(86) International application number: PCT/BR2011/000211
(87) International publication number: WO 2012/003560

(57) **Abstract**

It is described an equipment (300) for laser-drilling comprising: a) an optical component or feed module, consisting of a set of lasers (200), the active optical fiber (320), in the form of hollow coil (210), the excitation of the laser active medium being made through the coupling of the light emitted by lasers diodes (220) inside the active fiber, and b) a mechanical component that is an optic drill bit (100) with body (140) rigid and hollow and end (130) of any geometry, the said drill bit (100) being gifted by leaky orifices (110) for the optical fibers connection (320) or bundle of optical fibers with drill bit walls (100) and orifices (120) to allow the drilling and cooling fluids are released in the surface to be drilled, the optical fibers (320) or bundle of optical fibers being provided from the said feed module. The feed module is responsible for high intensity light generation that through optical fibers is guided up to the optic drill bit. The feed module and the optic drill bit are coupled to a drill string.

## Description

### FIELD OF THE INVENTION

The present invention relates to the field of equipments for laser-drilling, more specifically to such equipment comprising an optical drill bit and a feed module with lasers embedded.

### BACKGROUND OF THE INVENTION

A solution for the problems associated to the use of conventional drilling equipment that employs drilling bits that comprise one or more cutting mechanical elements was the use of laser beams as a mean of drilling wells in the ground.

Thus, US Patent 3,871,485 teaches a drilling process using a laser beam wherein a laser beam generator connected to a voltage generator fined by drilling mud or other liquid that passes through a laser beam slot connected to the drill string is positioned in the wellbore and a crystal reflector is positioned inside the laser beam slot to reflect the beam in a elliptical format through the formation to be entered.

US Patent 4,066,138 teaches an apparatus to drill the ground assembled above the ground that drives downward a high power energy laser ring to drill a cylindrical orifice by fusing the successive annular regions of the extraction to be entered in a power level that smashes and ejects the orifice successive layers.

US Patent 4,113,036 teaches a laser-drilling method and system to recover fossil fuels wherein a vertical bore is drilled in an underground formation; a laser beam is projected through the vertical bore and reflected horizontally from the orifice through the formation along an array of bores.

US Patent 4,090,572 teaches a process and apparatus for laser-treatment of geological formations where a laser beam is projected through a guide for the light beam in a wellbore along a beam guide providing enough energy lasers to melt or vaporize formations under underground conditions.

Despite all advantages associated to the use of this drilling method, it is not based on the physical contact between the drill bit and the surface to be drilled (among them, the drilling speed, lack of physical contact between the drilling bit and the surface to be drilled, energy efficiency, etc.), the lasers utilization in drilling wells was not developed at trade levels in function of the lack of lasers with minimal power needed for efficient and competitive drilling when compared to mechanical equipments.

Other problems that limited the practical implementation of the laser-well drilling were the lasers dimensions that make its insertion in the orifices (wells) drilled impossible as well as the nonexistence of efficient (with low losses by constraint, high transparency and control of susceptibility to nonlinear phenomenon induction) optical conductors (optical fibers), that allows the guidance of the laser light to long distances and in places with small dimensions and difficult access.

US Patent 5,107,936 teaches a hot-drilling process that employs laser beams as heat source in which the wellbore profile is melted by the heat source and the resulting molten stone is pressed by the neighbor side stone during the drilling process.

In the late 90's and early 2000's compact and high power lasers systems became commercially available and the interest in its utilization in wells drilling is renewed. Despite the high power lasers development (based on different types and active materials, for example, gas, dyes, semiconductor, crystal, optical fiber doped or not, etc.) the optical fibers development (mono-mode, multi-mode and with several profiles of the cross-section index of refraction and materials) with high transparency, low losses by constraint and control of non-linearities constitute other motivating factor to use high intensity laser light for drilling.

With the use of optical fibers it is possible to guide the high intensity laser light to long distances (some tens of kilometers) and keep the laser light quality (temporal and special intensity and coherencies) in the fiber outlet sufficiently high ensuring the delivery of high optical densities - condition that increases the drilling process efficiency.

In this regard, the patents literature point out the following recent documents about the subject matter.

US Patent 6,365,871 relates to a laser-drilling method through the tool as nozzle (40), in cavity that comprises the drilling bore (41) through the tool (40) with laser (50), providing fluid with laser barrier properties in the cavity so, when the bore (41) is open for the cavity, the laser light passing through the bore (41) is incident over the fluid whereby the tool (40) transversal to the cavity from the bore (41) is protected from the laser light, and causing the fluid does not enter in the drilled bore (41) by laser during the drilling process. The apparatus to perform the method is also described.

US Patent 6,626,249 describes the drilling and recovery geothermal system that comprises a drilling rig having a riser with laser and radar perforation assembled in the said elevator, drilling pipe, rotatory mirror assembled adjacent to the lower end of the said drilling pipe and devices to establish vacuum adjacent to the said lower end of the drilling pipe in order to remover and recover heat and drilling waste.

US Patent 6,755,262 relates to a well drilling apparatus that can be at least partially placed in a drilling well. The apparatus includes a plurality of optical fibers, each one of them has an end near to the energy inlet and an end far from the energy outlet of the optical fiber. At least a focus lens is arranged in the far end from the optical fiber light outlet. The focus lens is placed to receive energy from the far end from the optical fiber light outlet corresponding to at least one optical fiber and focus the same outward the optical fiber light outlet.

US Patent 6,870,128 describes the well drilling method with laser beam, the method comprising to guide the laser beam inside the conduit, where the laser beam is guided through the conduit by internal reflectivity of the said conduit, and extending the conduit inside the well, so the laser beam exiting the conduit is guided over the area in the well to be drilled. A system for drilling well with laser beam is equally provided, the system comprising a device to guide the laser beam inside the conduit, wherein the laser beam is guided through the conduit by internal reflectivity of the said conduit, and device to extend the conduit inside the well, so the laser beam exiting the conduit is guided to an area in the well to be drilled. The invention further provides an apparatus composed of conduit that can be extended inside the well, and the surface inside the conduit, where the internal surface is reflective to the laser beam.

The US Patent 6.888.097B2 describes an apparatus for drilling well walls, the apparatus including an optical fiber cable with an end for laser input and an end for laser output. A source of laser is connected to the end of the laser input and a laser head is connected to the end of the laser output. The laser head includes a laser control component to control at least a feature of the laser beam. Control elements in the laser head to control the movement and localization of the laser head are connected to the optical fiber cable. The laser head is protected in a slot that protects the optical fiber cable and elements as reflectors and lens to control the laser beam emitted by optical fiber cable there arranged, from the aggressive environment found in underground operations.

US Patent 7,147,064 describes a drilling apparatus to drill a well having a drilling bit set that includes a laser cutting mount and a vacuum mount. The vacuum mount is adapted to collect steams generated by the laser cutting mount near the drilling bit set during the drilling apparatus operation. Steams collected can thus be processed by a chromatographic analyzer to determine the features of the rock formation being drilled.

In US Patent 7,487,834 a method for wells drilling with high power laser is described intended to provide a laser beam to the well production zone to drill the coating, the cement, and to form high permeability penetrations in the formation of stone reservoir to increase the gas flow and/or oil to the well. The laser beam is provided to a punch laser positioned in the production zone by an optical fiber-cable, the cable being sloped around 90 degrees and formatted in the desired beam orientation and profile. A cutting nozzle in the punch end provides a cleaning flow to 1) remove from the well droplets of molten metal, and cement and stone broken fragments that can block the laser beam and 2) create a free pathway through the well liquids allowing the beam to reach the target surface during the drilling.

US Patent 7,416,258 describes the equipment and method to use lasers in the stones breaking and drilling. A group of laser beams is handled in a controlled way by an electro-optical key to locations on the stone surface, creating multiple orifices and removing a stone layer at the diameter desired. Only a single laser beam irradiating about 1000 to 5000 W/cm2 breaks the stone. The three-dimensional stone removal is performed by breaking the consecutive layers with the laser head intermittent perpendicular movement to the stone surface just drilled.

US patent application US 20100078414 A1 relates to an apparatus for underground drilling having at least one optical fiber to transmit light energy from an energy laser source arranged above the ground towards an underground drilling location and a mechanical drill bit having at least one cutting surface and forming at least a light transmission channel aligned to transmit the light from at least one optical fiber through a mechanical drill bit using at least one light transmission channel. It is alleged the equipment developed is especially proper for non vertical wells.

Brazilian patent published PI0806638-8 (Laser drilling system and method), of the same authors of the present document, describes an optical drill bit (104) integrated to a laser-drilling system. However, this patent application does not describe details of the said drill bit.

It is important to highlight that even in the inventions that propose the use of optical fiber(s) to delivery high intensity laser light in regions of bottom hole there is no practical demonstration of this possibility when fiber long passages are considered (deep wells, i.e. >hundreds of meters). The main reason for this is the non-linear phenomenon induction during high intensity laser light propagation for fiber long passages, which is responsible for mitigate the guided light, degrade fiber transparencies and, depending on the energy density and/or peak energy inside the fiber, can damage permanently the optical fiber. This problem is classic in the optic guided and many research groups and companies have been making efforts to reduce or eliminate them. In this respect, see the summary by A. Mendes & T.F. Morse, "Specialty Optical Fibers Handbook", Chapter 22, pp. 671-696, Elsevier Publisher, 2007.

Among several lasers technologies, it is important to highlight the optical fiber-laser development where the high intensity laser light is generated inside the optical fiber itself. This laser is compact and in general does not require cooling even when operating with high intensities (≥kW). Furthermore, the losses by coupling of the light in the laser outlet, with conductor optical fiber (responsible to guide the high intensity laser light for long distances up to the interest region) are minimal once it is the fiber-fiber coupling and not the fiber without free space.

Regarding the laser light wavelength, it is noted the commercial availability of high power lasers systems with wavelengths varied (from ultraviolet to infrared), depending on the active element and on the laser cavity design, and lasers with tunable wavelength. This means that, depending on the surface material to be drilled, it is possible to use the drilling wavelength coinciding with the absorption range of this material. This significantly increases the process efficiency. Thus, during the drilling it is possible to select in real time the more appropriate laser light wavelength to the surface. This is other technological advantage of the laser-drilling regarding a conventional mechanical system.

Therefore, it would be advantageous that the art had one laser-drilling equipment able to generate high intensity light, such light being guided through optical fibers up to one optical drill, such drill bit being the mechanical component that supports optical fibers, provides geometrical control to high intensity light action and promotes the drilling system interface with the surface to be drilled.

Regarding the researched literature, no documents anticipating or suggesting the teachings of the present invention were obtained, so the solution here proposed has novelty and inventive step toward to the state of the art.

### SUMMARY OF THE INVENTION

Widely, the laser-drilling equipment according to the invention comprises:

a) An optical component or feed module, consisting of a set of optical fiber-lasers, active, in the shape of hollow coil, the excitation of the laser active medium being made through the coupling of the light emitted by lasers diodes inside the active fiber, the said diodes being connected more efficiently to the active fiber coil considering the available space and the needed heat transfer to maintain the diodes operation temperature; and

b) A mechanical component that is an optical drill bit with rigid and hollow body and end of any geometry, the said drill bit being adopted of leaky orifices for optical fibers connection or bundle of optical fibers with drill bit walls and orifices to allow the drilling and cooling fluids to be released in the surface to be drilled, the optical fibers or bundle of optical fibers being derived from the said feed module, where the feed module is responsible for high intensity light generation that through optical fibers is guided up to optical drill bit, the said feed module and the optical drill bit being coupled to a drill string.

For the said drill bit head with spherical geometry, it is determined an angle α from the line drawn in the middle of the ball and perpendicular to the optical drill bit body connection direction with the drill string up to the ball intersection with the drill bit remaining body. This angle defines the operation maximum angle of the optical drill bit and consequently the maximum slope of the well or drilled bore.

Thus, the invention provides an equipment for laser-drilling where the laser system is responsible for high intensity light generation that through optical fibers is guided up to optical drill bit, this being the mechanical component that supports the optical fibers, provides geometrical control to high intensity light action and promotes the interface of the drilling system with the surface to be drilled.

The invention further provides an equipment for laser-drilling with a reduced number of moveable mechanic parts present in the drilling system.

The invention provides an equipment for laser-drilling that significantly reduces the need of drill string rotation, with large operational advantage.

The invention also provides an equipment for laser-drilling able to monitor the drilling process in situ, with process control increase.

The invention further provides an equipment for laser-drilling able to drill different materials without the need to substitute the drill bit.

The invention also provides an equipment for laser-drilling where depending on the material to be drilled in different wavelengths of the laser light are triggered to increase the drilling efficiency.

The invention further provides an equipment for laser-drilling where it is possible to use different systems of operation as ongoing or pulse.

The invention also provides an equipment for laser-drilling with reduced maintenance costs.

The invention further provides an equipment for laser-drilling where the tectonic movement risks, caused by drilling are reduced due to the lack of contact between the optical drill bit and the surface to be drilled.

The invention also provides an equipment for laser-drilling where the drilling system dimensions are lower and this is also lighter than traditional systems.

The invention further provides an equipment for laser-drilling where generally it is possible to maintain higher control of the drilling depth and the drilling direction.

The invention also provides an equipment for laser-drilling where due to mechanical strength increase of the drilled well walls against walls surface vitrification, it is reasonable to speculate on reducing the need for coating during the drilling.

The invention further provides an equipment for laser-drilling that allows the drilling direction control through the drill bit format, where the angle control α enables the drill bit drills orifices to α degrees of the drill bit middle line.

The invention also provides an equipment for laser-drilling with lasers individual control that feed the light interaction points with the surface, to determine the drilling direction turning the lasers on or off in specific regions of the drill bit as needed.

These and other objects of the invention are immediately appreciated by those skilled in the art and by companies with interests in the segment, and will be described in sufficient detail to be reproduced in the following description.

### BRIEF DESCRIPTION OF THE DRAWINGS

The figure 1 is an optical drill bit section of the drilling equipment of the invention showing the head and the body of the same.

The figure 2 is a view of the laser system or feed module of the drilling equipment of the invention.

The figure 3 is a general section of the equipment assembled in a drill string, with feed module and optical drill bit.

### DETAILED DESCRIPTION OF THE INVENTION

The examples herein showed aims only to illustrate one of the numerous ways of performing the invention, however, without limiting the scope of the same.

Thus, the invention relates to an equipment for laser-drilling where the laser system is responsible for high intensity light generation that through optical fibers is guided up to optical drill bit, this being the mechanical component that supports optical fibers and promotes the interface of the drilling system with the surface to be drilled.

The equipment for drilling oil wells according to the invention, composed of feed module and optical drill bit, can be directly integrated to drilling conventional systems and can operate at any depth.

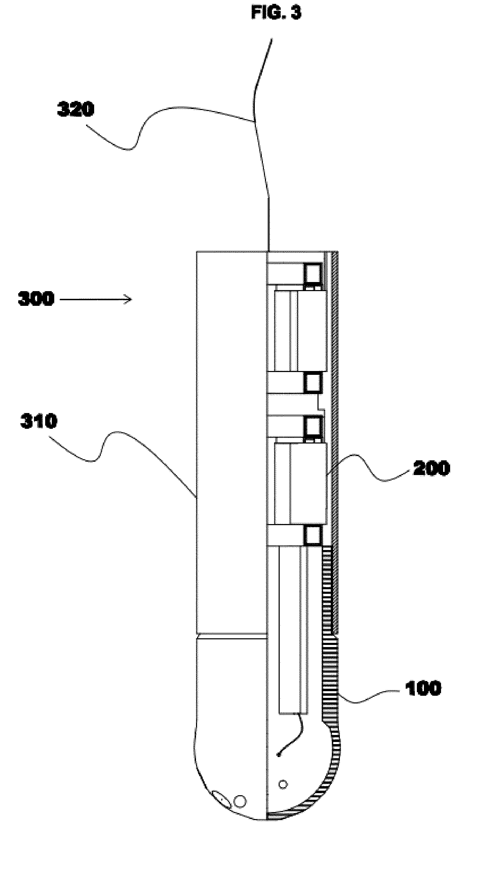

The feed module is fed by an electricity metal conductor, the said module consisting of a set of lasers, that generate the light with high intensity for drilling, and it is coupled between the drill string and the drill bit, as can be seen in the figure 3. The light emitted by lasers is guided up to optical drill bit through optical fibers.

The mechanical flexibility in the energy conduction responsible for drilling up to optical drill bit, provided by optical fibers allow the idealization of virtually any optical drill bit format.

According to the present invention concept, for each point of laser light interaction with the stone to be drilled there is an optical fiber providing high intensity laser light. Associated to each fiber may be a laser or multiple lasers combined producing the light for drilling. All lasers used in the drilling are embedded with the drill bit in the cylindrical device consisting of standard tube employed in the drill string with internal modifications needed to pack lasers. Thus, lasers with the support cylinder form the feed module. Therefore, the main function of this module is generating and supplying high intensity laser light for the optical drill bit.

The figure 3 shows the feed module coupled to optical drill bit.

Advantageously, the equipment modular feature of the invention eases the implementation of the same once each part can be developed and tested independently. For example, it is possible to firstly develop a modular laser that can operate inside a cylinder and in the conditions of pressure and temperature found in the bottom of a well and that further has conditions to generate light energy sufficient for drilling a stone. With this laser (that corresponds to only one point of laser light interaction with the stone in the optical drill) it is estimated the action effective area in the stone and consequently it is determined the number of active points in the optical drill bit, which corresponds directly to the number of the feed module lasers.

In addition, it is possible to evaluate constructive details of the fiber coupling to the laser and the fiber to the optical drill bit.

Further advantageously, i) the fact of having the laser embedded with the optical drill bit significantly reduces the drilling system complexity; ii) problems with the optical fiber mechanical fragility, loss of optical properties with the hydrogen diffusion, in the case of silica fibers, as well as limitation with the power level transmitted over long distances (responsible for non linear phenomenon induction), etc. are eliminated.

On the other hand, it is necessary the lasers, which will be embedded with the drill bit, to support the operation in unconventional conditions, high external hydrostatic pressures and increased temperatures. In addition, they must be packed in reduced spaces such as the interior of the drilling duct. Obviously, even thus, lasers must have conditions to generate enough energy to promote an efficient drilling of stones.

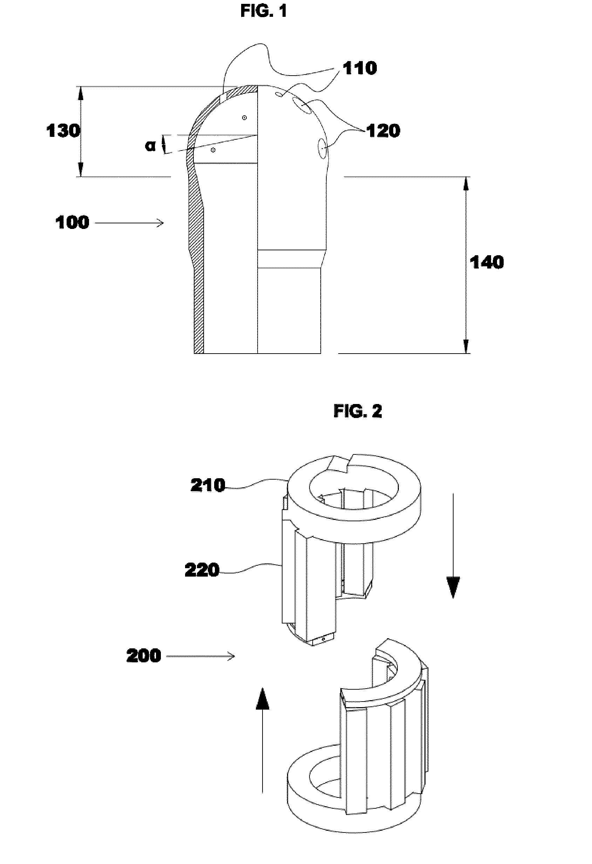

Based on these premises, involving operation conditions and needed levels of energy, Applicants researches led to the development of a laser encapsulated in the shape of ring or coil that is presented in the figure 2. It consists of a high power optical fiber-laser, the laser being pumped by laser light emitting diodes. The light emitted by many diodes is combined to excite the optical fiber-laser active medium and then produce laser light with high intensity and high time consistency and sine qua non spatial condition to focus the light in the fiber outlet.

The ring or coil format with pumping diodes positioned over a half of the ring surface checks the modular feature to the laser project. This allows the lasers to be assembled on each other inside the drilling duct forming the feed module, according to Figure 2 and Figure 3.

The ring format also enables the drilling fluid circulation through lasers in that, besides checking the compatibility with the remaining of the drilling system, where the fluid circulates inside the drill string, aids in the lasers cooling.

The light generated by lasers can be guided up to the optical drill bit by means of diffractive optical fibers which properties are ideal to transport high densities of energy. These fibers have also high damage resistance in its interfaces.

It is important to highlight the idea of using optical fiber-laser pumped by diodes is simply motivated by the light optical quality emitted by this type of lasers. An alternative for the present invention is to connect the diodes directly to the fiber and use the light produced by them to drill, without the need to set up with fiber-laser.

The optical drill bit, in general, is formed by metal structure, with specific dimensions and shapes for each drilling process, where optical fibers that transport the high intensity laser light are coupled in the internal wall of the said drill bit and provide high intensity light for drilling.

The optical drill bit admits to be configured at any dimension or physical format needed for different drilling scenes. The end formats of the drill bit will depend on the type of ground or stone to be drilled, the type of drilling to be performed, the drilling diameter, the well or bore depth and the resulting curvature and/or well or bore angle.

The optical drill bit showed in the figure 1 is an example of the drill bit for drilling wells with diameter of 8". Each channel, where optical fibers are fixed, is perpendicular to the drill bit surface tangent in the point of intersection. This ensures that the light focuses perpendicularly to the surface to be drilled in the whole drill bit circumferential surface.

The number of channels to connect the fibers, i.e., points of interaction of the laser light with the stone to be drilled, depends on the drill bit superficial area and on the individual efficiency of each laser in the drilling process.

The drilling efficiency is given in a simplified manner by the mass of stone removed divided by the energy embedded in the drilling process.

Two features of the present drill bit design allow the direction control in the drilling. The first is through the drill bit format. According to what is shown in the figure 1, the spherical symmetry of the drill bit allows, against angle control α (constructive parameter), the drill bit drills bores at α degrees of the drill bit middle line.

Other feature that allows the direction control is the lasers individual control that feed the points of the light interaction with the surface. It is possible to determine the direction in which it is desired to drill turning the lasers on or off in specific regions of the drill bit as needed. Thus, such as in the perforation operations, this invention can be used to drill bores perpendicular to the drill bit shaft, through the formation and passing the coating and the cement region, to allow the oil or reservoir gas flow to the coated well.

The drill bit design further foresees channels for drilling fluid outlet as showed in the figure 1.

Example 1. Preferred embodiment

The invention is described in the following by reference to the attached Figures, without, however, limiting the same to the illustrated configurations.

The figure 1 illustrates the optical drill bit (100) of the equipment of the invention. In this Figure, the said drill bit has a head (130) of any format, herein illustrated as spherical such as a possible modality among others and a tubular body (140).

The angle α mentioned above is measured from the line drawn in the middle of the ball and perpendicular to the direction of the optical drill bit (100) body connection with the drill string up to ball intersection with the drill bit remaining body. This angle defines the operation maximum angle of the optical drill bit (100) and consequently the maximum slope of the well or drilled bore.

Leaky orifices are present in the drill bit (100) head (130), being the orifices (110) employed for optical fibers connection or bundle of optical fibers with drill bit walls and orifices (120) to allow the drilling and cooling fluids to be released in the surface to be drilled.

The number of orifices (110) for optical fibers connection or bundle of optical fibers is determined from the drilled area by each optical fiber or bundle of optical fibers so that the whole head surface (130) in the shape of ball can have conditions to play the role of perforating.

The drill bit inner (100) is hollow, enabling the passage of the optical fibers or bundle of optical fibers (not represented) conductive of optical energy for drilling and its connection to the leaky orifices (110) and also drilling and cooling fluids flow until to be released in the surface to be drilled by leaky orifices (120).

The figure 2 illustrates the lasers used in the equipment of the invention.

For lasers (200), that are not high intensity light sources employed in the laser-drilling, can be integrated to the drill string, they need to be built with specific format. In addition to being efficient high power light generation sources, lasers need to be packed inside the drill string pipes and also allow the drilling fluid to pass through them. The more appropriate architecture for this type of need is the optical fiber-lasers. In this type of lasers, the fiber doped with rare earth ion, constituting the active medium, is flexible and can be wound forming the hollow coil (210) as showed in the figure 2.

The excitation of the laser active medium, the optical fiber doped, is made through the coupling of the light emitted by lasers diodes (220) inside the active fiber. The lasers diodes (220) are called pumping diodes.

In the project presented in the figure 2 the lasers diodes (220) are perpendicularly connected to the coil (210) of active fiber. Thus, the laser inner (200) is completely hollow. This format mainly appreciated the thermal dissipation of the electro-optical conversion process of the pumping diodes. This configuration uses its own drilling fluid as control agent and temperature stabilization.

It is further possible the specific fluids for cooling being injected in the drill string inner to ensure the lasers temperature control.

The lasers diodes position (220) relatively to the active optical fiber coil (210) allow two optical fiber-lasers modules (200) to be coupled as the indicated in the figure 2 making the system even more compact.

The feed module is composed of the plurality of lasers (200) the optical fiber which the light output is taken up to optical drill bit (100) by the optical fibers (320) (see figure 3).

Tens of lasers (200) can be stacked along the drill string pipe as needed, for efficient drilling.

Each laser (200) is independently controlled enabling different drilling systems, pulse and ongoing, for example, to be employed in the drilling.

The figure 3 shows the illustration of the equipment (300) concept of the invention where can be noted: the optical drill bit (100), the feed module formed by a set of lasers (200) and the optical fibers (320) connecting each laser (200) to a specific point inside the drill bit (100). Each point of connection between the drill bit (100) and the fiber (320) is a communication channel with the drill bit external surface (100) and is perpendicular to the surface to be drilled, thus, the optical fiber (320) provides high intensity light directly over the surface.

Those skilled in the art will appreciate the teachings herein presented and will be able to reproduce the invention in the embodiments presented and in others variants, falling within the scope in the appended claims.

## Claims

1. A device for laser-drilling, comprising:
a) an optical component or feed module, comprised of a plurality of lasers (200), each one of the lasers (200) consisting of flexible optical fiber (320), wound in shape of hollow coil (210), and lasers diodes (220) perpendicularly connected to the said coil (210) of active fiber; and
b) a mechanical component or optic drill bit (100), the drill bit being gifted of: a head (130) with orifices (110) and (120), and of a body (140),
wherein: i) the feed module is responsible for high intensity light generation that through the optical fibers (320) is guided to the optic drill bit (100), and ii) the feed module and the said optic drill bit (100) are coupled to a drill string.

2. A device, according to claim 1, **characterized by** the lasers geometry (200) to check the same modular characteristic with the possibility of assembling the said lasers above each other in the drill string.

3. A device, according to claim 1, **characterized by** being able to accept heads (130) of any format.

4. A device, according to claim 1, **characterized by** the optic drill bit (100) head (130) has spherical format.

5. A device, according to claim 4, **characterized by** the head (130) presents an angle that defines the operation maximum angle of the said optic drill bit (100).

6. A device, according to claim 5, **characterized by** the angle is determined from the line drawn in the middle of the ball and perpendicular to the connection direction to the optic drill bit (100) body connection with the drill string up to the spherical head (130) intersection with the remaining body (140) of the drill bit (100).

7. A device, according to claim 5, **characterized by** providing direction control in the drilling through the optic drill bit format (100), wherein the operation angle control enables the said drill bit drill orifices in the angle said, regarding to the middle line of the same.

8. A device, according to claim 1, **characterized by** providing, for each point of laser light interaction with the stone to be drilled, an optical fiber (320) supplying high intensity laser light.

9. A device, according to claim 1, **characterized by** each optical fiber (320) that is associated to a laser (200) or multiple lasers (200) combined producing the light for drilling.

10. A device, according to claim 1, **characterized by** lasers (200) used in the drilling that are embedded with the optic drill bit (100) in device consisting of a standard tube employed in the drill string.

11. A device, according to claim 1, comprising lasers individually controlled (200) that feed the points of the light that interacts with the surface, to determine the drilling direction turning the said lasers on or off in specific regions of the drill bit (100) as needed.

12. A device, according to claim 1, **characterized by** the said orifices (110) are intended to the optical fibers connection (320) or bundle of optical fibers with the drill bit walls (100), while the orifices (120) are intended to allow drilling and cooling fluids to be released in the surface to be drilled.

13. A device, according to claim 1, **characterized by** each orifice (110) wherein optical fibers are fixed to be perpendicular to the optic drill bit (100) surface tangent in the point of intersection, ensuring the light incidence perpendicular to the surface to be drilled in the whole surface of the said optic drill bit.

14. A device, according to claim 1, **characterized by** the number of orifices (110) is determined from the drilled area by each optical fiber or bundle of optical fibers such that the whole drill bit (100) head (130) surface is able to the drilling function.

15. A device, according to claim 1, **characterized by** the optic drill bit (100) is the mechanical component that supports the optical fibers (320), provides geometrical control to the high intensity light action and promote the interface of the said drilling device (300) with the surface to be drilled.

16. A device, according to claim 1, **characterized by** the connection of the diodes laser (220) to the coil of active fiber (210) is effected considering the space available and the heat transfer needed to maintain the operation temperature of the said lasers diodes (220).

17. A device, according to claim 1, **characterized by** alternatively diodes laser (220) that are connected directly to optical fibers (320) and the light generated by the same are used for drilling, dispensing the coils (210) of fiber-laser.

18. A device, according to claim 1, **characterized by** the operation system of the pulse type.

19. A device, according to claim 1, **characterized by** the operation system of the ongoing type.
